Europäisches Patentamt

European Patent Office

Office européen des brevets

(11) Publication number: **0 111 390**
**B1**

# EUROPEAN PATENT SPECIFICATION

(45) Date of publication of patent specification: **27.01.88**  (51) Int. Cl.⁴: **G 02 B 6/38**

(21) Application number: **83306761.4**

(22) Date of filing: **07.11.83**

(54) Fiberoptic rotary joint.

(30) Priority: **08.12.82 US 447907**

(43) Date of publication of application:
**20.06.84 Bulletin 84/25**

(45) Publication of the grant of the patent:
**27.01.88 Bulletin 88/04**

(84) Designated Contracting States:
**DE FR GB IT NL SE**

(56) References cited:
**WO-A-80/02750**
**GB-A-2 091 899**
**US-A-4 109 998**
**US-A-4 124 272**
**US-A-4 258 976**

(73) Proprietor: **SPERRY CORPORATION**
**1290, Avenue of the Americas**
**New York, N.Y. 10019 (US)**

(72) Inventor: **Gilligan, Lawrence Henry**
**3022 Colonial Drive**
**Charlottesville Virginia 22901 (US)**

(74) Representative: **Singleton, Jeffrey et al**
**ERIC POTTER & CLARKSON 27 South Street**
**Reading Berkshire, RG1 4QU (GB)**

Courier Press, Leamington Spa, England.

## Description

The present invention relates generally to fiberoptic data transfer devices and more specifically to a rotary joint for coupling multichannel fiberoptic data across a rotating boundary.

Fiberoptic techniques make possible many useful devices for transmitting optical data. Frequently, a given application requires multichannel data transfer across a rotating boundary such as a reel hub or an antenna mount. Furthermore such applications often require duplex or reciprocal operation in which data may be transferred in either direction across the rotating boundary. All known prior techniques permit only single signal operation or are non-reciprocal.

One known multichannel fiberoptic rotary joint functions by converting the light signals in the various fibers to electrical signals, applying these electrical signals to conventional sliprings, and reconverting the electrical signals to light signals. This prior art rotary joint, however, is non-reciprocal. Signals can be passed through the rotary joint in only one direction. Furthermore, the sliprings in the prior art device make it prone to interference, cross talk, and wear which causes noise. Since the rotary joint of the present invention eliminates the need for sliding contacts, these latter problems are avoided.

Other known fiberoptic rotary joints are disclosed in US—A—4109998, GB—A—2091899 and WO—80/02750. WO—80/02750 discloses an optical rotary joint for coupling light between first and second sets of optical fibers which are relatively rotatable about a common axis, the joint being of the type employing pattern plates each having lens mounting inserts, collimating lenses inserted in the lens mounting inserts and positioned adjacent the first and second sets of optical fibers, optical de-rotating means, and drive means for the de-rotating means.

The present invention is characterised by the provision of a first pattern plate which is stationary and has position-adjustable lens mounting inserts, by the provision of a second pattern plate which is rotatable and has fixed lens mounting inserts, and in that the drive means for the de-rotating means include a ring gear mounted on the rotatable pattern plate, a shaft coupled to the optical de-rotating means, a first planetary gear fixedly mounted on the shaft in engagement with the ring gear, a second planetary gear fixedly mounted on the shaft, and a stationary ring gear engaged with the second planetary gear, the shaft, the first and second planetary gears, the ring gear and the stationary ring gear being constructed and arranged to rotate the optical de-rotating means in a prescribed manner in response to rotations of the ring gear, such that the rotatable pattern plate and the optical de-rotating means rotate in a manner to maintain optical coupling between corresponding lenses of the first and second pattern plates independent of angular displacements of the rotatable pattern plate.

A fiberoptic rotary joint in accordance with the invention will now be described in greater detail, by way of example, with reference to the accompanying drawings, in which:—

Figure 1 is a diagram illustrating the operation of the invention.

Figures 2 and 3 are diagrams useful in explaining the operation of prism de-rotators; and

Figure 4 is an illustration of the embodiment of the invention.

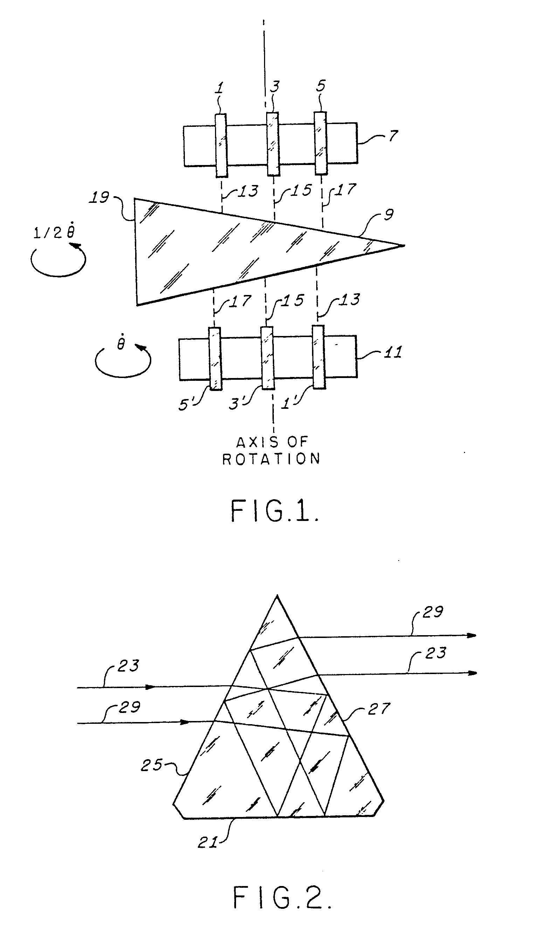

Figure 1 illustrates in a general way the mode of operation of a rotary joint employing the principles of the present invention. For purposes of explanation, a system employing three data transmission channels has been illustrated in which data is being transmitted from individual lenses, 1, 3, and 5 mounted in a stationary pattern plate 7 through a de-rotator 9 to corresponding lenses 1', 3', and 5' in a rotatable pattern plate 11. It is to be understood that the principles of the invention may be applied to systems employing more or fewer than three channels and that data may be coupled in either direction across the joint. Furthermore, it is to be understood that the principles of the invention may be applied to systems in which both pattern plates 9 and 11 are rotating about the same vertical axis of rotation, but at different rotational speeds.

The various lenses are connected to respective fiberoptic fibers or filaments and serve to convert the data flowing in such fibers into collimated light beams 13, 15, and 17 and to couple the received light beams to the corresponding fiberoptic filaments on the other side of the rotary joint. Lenses of this type are known in the art and may, for instance, consist of graded index rod ("Grinrod") lenses. Typically such lenses are 1—2 mm in diameter and 4—12 mm in length. By connecting a fiberoptic filament to the center of the cylinder end, an axial collimated beam may be formed or received.

The de-rotator 9 serves to direct each collimated light beam onto the appropriate lens even though the lens is rotating about the axis of rotation. Although various arrangements of mirrors or prisms are known which are capable of rotating images, Pechan, Dove or Delta prisms presently appear to be more practical. Of these, the Delta prism is presently preferred because it involves short optical paths and is relatively easy to fabricate. For this reason the following explanation is directed to this type of prism, although it is to be understood that other prisms or optical systems may be used for the de-rotator.

Referring again to Figure 1, the prism de-rotator 9 is caused to rotate about the common vertical axis of rotation at one-half the rotational speed of the rotatable pattern plate 11 so as to continually direct the individual collimated light beams onto the respective lenses 1', 3' and 5'. As will be explained, the prism operates to invert the position of the beams so that beam 13 enters the prism in a position closest to the base 19 but emerges in a position farthest from the base.

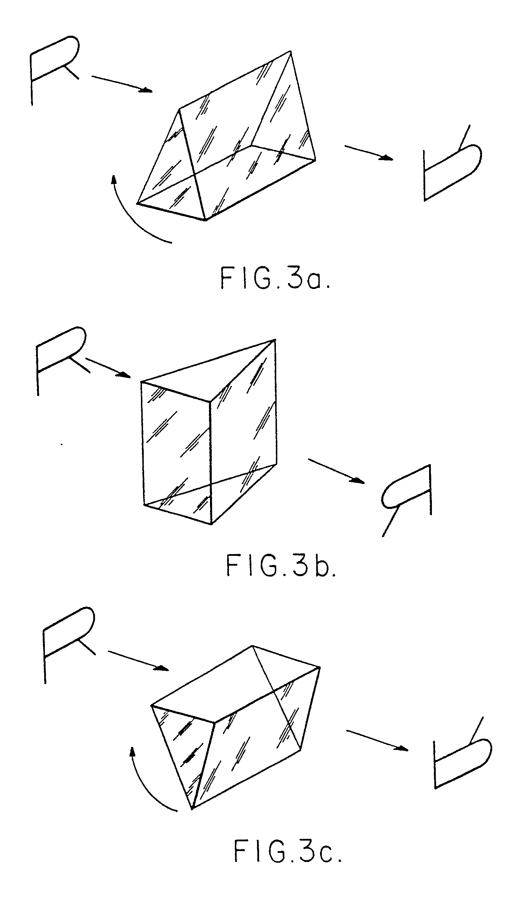

Thus data from lens 1 is coupled via lens 1' to the fiberoptic filament connected to that lens. The manner in which this coupling is maintained depite the rotation of pattern plate 11 can be understood by referring to Figures 2 and 3.

Figure 2 illustrates the manner in which light beams are directed through a typical Delta prism. The prism of Figure 2 includes a base portion 21 which is silvered to provide a reflective surface. The prism is constructed from a transparent material providing a velocity of light less than that of air so that a beam of light such as the beam 23 entering the prism along a line parallel to the base 21 is refracted downwardly. The slopes of the sides 25 and 27 are chosen so that internal beams arising from incident beams parallel to the base 21 experience total internal reflection as will be explained. The lower corners of the prism are ordinarily chamfered although this feature is not necessary to the practice of the invention.

Consider now the action of the prism on the incident light beam 23: as the beam 23 enters the prism it is refracted downwardly and proceeds to the surface 27 where it experiences total internal reflection. The reflected beam then propagates to the silvered surface 21 where it is reflected upwardly to the face 25 which again provides total internal reflection and again directs the beam toward the surface 27. Upon emerging from the prism, the beam is refracted downwardly so that the emerging beam 23 is parallel to the base of the prism and in the same direction as the incident beam 23.

If a second beam 29 parallel to, but below, the beam 23 enters the prism, it experiences reflections and refractions similar to those experienced by the beam 23. However, because of its displacement from the first beam, the beam 29 emerges from the prism above the beam 23 as illustrated in Figure 2.

Although the prism serves to invert the positions of the beams in the plane of transmission normal to the prism base 21, the prism retains the relative position of beams in the plane of transmission parallel to the prism base. Thus an additional beam parallel to, but behind beam 23 in Figure 2 would emerge from the prism parallel to but behind beam 23.

Figure 3 illustrates the operation of these principles as a prism is rotated in a manner in accordance with the principles of the present invention. For purposes of illustration, Figure 3 depicts a stationary object such as an illuminated letter R and the resultant image as the prism is rotated. In figure 3(a), the prism is positioned upright with its base in a horizontal plane. Under these conditions, the individual rays of light emanating from the object are inverted in the vertical planes, but are unaffected in the horizontal plane. The resultant image is thus effectively inverted.

In Figure 3(b), the prism has been rotated through an angle of 90° about a horizontal axis so that its base is now vertical. Under these conditions, the incident rays are inverted in the horizontal planes but unaffected in the vertical planes, whereby the resultant image is effectively rotated 180° by the 90° rotation of the prism.

In Figure 3(c), the prism has been rotated an additional 90° about a horizontal axis so that it is in an inverted position with its base in a horizontal plane. In this position, the incident rays are inverted in the vertical plane but unaffected in the horizontal plane so that the image is restored to the same position that it occupied in Figure 3(a). Thus the image has again been effectively rotated an additional 180° in response to a 90° rotation of the prism.

Thus, essentially prism operates by laterally displacing and rotating each light beam by an amount dependant upon the angular position of the prism. From these observations it can be seen that the image rotates through twice the angle and in the same direction that the prism rotates. If the object were to rotate while the prism remained stationary, the image would rotate through an angle of the same magnitude but opposite direction from that of the object.

The application of these principles to the present invention can be understood by again referring to Figure 1. Assume that information is being transmitted through the lenses 1, 3 and 5 in the stationary pattern plate 7, via the lenses 1', 3' and 5' in the rotating pattern plate 11 to the external fiberoptic filaments.

Assume further that the pattern plate 11 rotates through 20° in a clockwise direction. The rotation of the pattern plate 11 will cause a corresponding clockwise prism rotation of 0°. However since rotation of the prism causes the image to rotate through twice the angle that the prism rotates, the image will be rotated 20° and the collimated light beams will still be directed onto the appropriate lenses.

Now consider the situation in which data is to be transferred from the lenses 1', 3' and 5' in the rotatable plate 11 to the lenses 1, 3 and 5 in the stationary plate 7. Again assume that the plate 11 rotates clockwise through an angle of 20°. If the prism were to remain stationary, the image falling on the plate 7 would be rotated counterclockwise through an angle of 20°. However, the rotation of the plate 11 will be accompanied by a clockwise rotation of the prism of 0° which serves to rotate the image 20° in a clockwise direction and thus restore the image to its original position so that each collimated beam remains directed onto the appropriate lens in the stationary pattern plate 7.

Thus it can be seen that the rotary joint is a duplex device in that it permits reciprocal operation: data may be passed through the device in either direction.

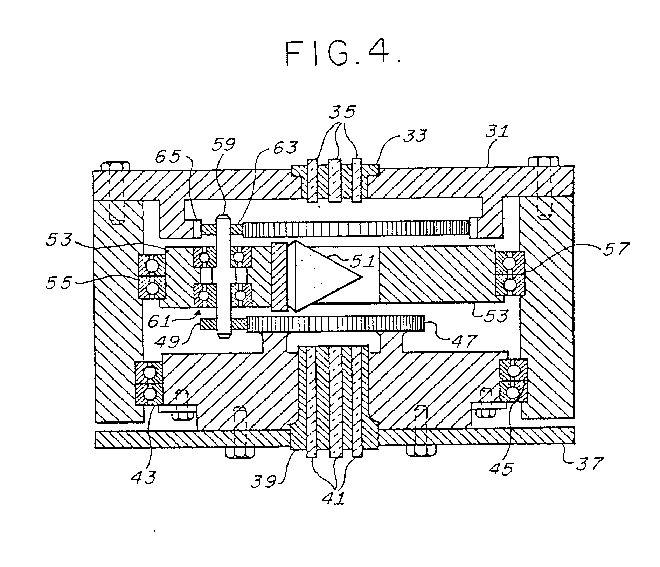

Figure 4 is a cross section view of a particular rotary joint constructed in accordance with the principles described with respect to Figure 1. In this embodiment, a stationary upper pattern plate 31 includes an insert 33 in which three lenses 35 are mounted. The insert 33 preferably includes provision for adjusting the alignment of the lenses 35. A rotatable lower pattern plate 37 also includes an insert 39 in which three lenses 41 are mounted. The rotatable pattern plate 37 is mounted in the housing by means of bearings 43 and 45. A ring gear 47 is mounted on the pattern plate 35 and meshes with a planetary gear 49. A de-rotator prism 51 is mounted on a rotatable plate 53 which in turn is mounted in the housing by means of bearings 55 and 57.

The planetary gear 49 is fixedly mounted on a shaft 59 which passes upwardly through a bearing 61 in the plate 53 and carries a second planetary gear 63 which is also fixed on the shaft. The gear 63 engages with a stationary ring gear 65.

In operation, the lower plate 37 is rotated about its axis of rotation which causes the planetary gear 49 and hence the shaft 59, to rotate around the shaft axis. The resultant rotation of the planetary gear 63 causes the rotatable plate 53 and therefore the prism 51 to rotate about its own axis of rotation in the manner previously described with respect to Figure 1.

It will be appreciated that the particular embodiment depicted in Figure 4 is presented for purposes of illustration. Numerous mechanical variations for providing the relative rotational motions may be utilised without departing from the principles of the invention.

In contrast to prior art devices, the present invention permits reciprocal operation. Furthermore, the present invention eliminates the need for electrical slip rings and the problems associated with such devices. In addition, the device of the present invention is passive and requires no electrical power input.

**Claims**

1. An optical rotary joint for coupling light between first and second sets of optical fibers which are relatively rotatable about a common axis, and of the type employing pattern plates each having lens mounting inserts, collimating lenses inserted in the lens mounting inserts and positioned adjacent the first and second sets of optical fibers, optical de-rotating means and drive means for the de-rotating means, characterised in that a first pattern plate (31) is stationary and has position adjustable lens mounting inserts (33), in that a second pattern plate (37) is rotatable and has fixed lens mounting inserts (39), and in that the drive means for the de-rotating means (51, 53) includes a ring gear (47) mounted on the rotatable pattern plate (37), a shaft (59) coupled to the optical de-rotating means (51, 53) a first planetary gear (49) fixedly mounted on the shaft (59) in engagement with the ring gear (47), a second planetary gear (63) fixedly mounted on the shaft (59), and a stationary ring gear engaged with the second planetary gear, the shaft (59), the first and second planetary gears (49, 63), the ring gear (47) and the stationary ring gear being constructed and arranged to rotate the optical de-rotating means (51, 53) in a prescribed manner in response to rotations of the ring gear (47), such that the rotatable pattern plate (37) and the optical de-rotating means rotate in a manner to maintain optical coupling between corresponding lenses (35; 41) of the first and second pattern plates (31, 37) independent of angular displacements of the rotatable pattern plate.

2. An optical rotary joint according to claim 1, characterised in that it further includes housing means for supporting the stationary pattern plate (31), and in that the delta prism (51) in the de-rotating means is mounted on a rotatable plate (53) disposed in a plane normal to the collimated light beams, the rotatable plate having an open central portion in which the delta prism is mounted so that the collimated light beams may pass unobstructed to and from the prism.

3. An optical rotary joint according to claim 2, characterised in that the rotatable pattern plate (37) is rotatably mounted in the housing in a plane normal to said common axis, such that the prism (51) is positioned between the rotatable pattern plate and the stationary pattern plate (31).

4. An optical rotary joint according to claim 3, characterised in that the ring gear (47) and the stationary ring gear are disposed in planes parallel to the stationary and rotatable pattern plates (31, 37) and constructed and arranged about said common axis such that the collimated light beams pass through the ring and stationary ring gears without obstruction.

5. An optical rotary joint according to claim 4, characterised in that the shaft (59) is rotatably mounted in a bearing (61) eccentrically positioned in the rotatable plate (53) supporting the delta prism (51) such that rotation of the rotatable pattern plate (37) causes the delta prism to rotate through angles that are equal to one-half of the rotatable pattern plate rotation angles.

6. An optical rotary joint according to any of the preceding claims, characterised in that the optical de-rotating means includes an optical delta prism (51) having a rectangular base, silvered for optical reflection, triangular end faces and first and second sloping rectangular sides, the delta prism being mounted for rotation about said common axis with the axis passing the centres of the first and second sloping sides.

**Patentansprüche**

1. Faseroptische Drehverbindung zur Kopplung von Licht zwischen ersten und zweiten Sätzen von relativ zueinander um eine gemeinsame Achse drehbaren Lichtwellenleitern, mit Musterplatten, die jeweils Linsenbefestigungseinsätze aufweisen, mit in die Linsenbefestigungseinsätze eingesetzten Kollimationslinsen, die benachbart zu den ersten und zweiten Sätzen von Lichtwellenleitern angeordnet sind, mit die Wirkung der Drehung beseitigenden optischen Einrichtungen und mit Antriebseinrichtungen für die die Wirkung der Drehung beseitigenden Einrichtungen, dadurch gekennzeichnet, daß eine erste Musterplatte (31) stationär ist und in ihrer Position einstellbare Linsenbefestigungseinsätze (33) aufweist, daß eine zweite Musterplatte (37) drehbar ist und feste Linsenbefestigungseinsätze (39) aufweist, und daß die Antriebseinrichtung für die die Wirkung der Drehung beseitigenden Einrichtungen (51, 53) ein auf der drehbaren Musterplatte (37) befestigtes Ringzahnrad (47), eine mit den die Wirkung der Drehung beseitigenden Einrichtungen (51, 53) gekoppelte Welle (59), ein erstes Planetenzahnrad (49), das fest auf der Welle (59) in Eingriff mit dem Ringzahnrad (47) befestigt ist, ein zweites Planetenzahnrad (63), das fest auf der Welle (59) befestigt ist, und ein stationäres Ringzahnrad umfaßt, das mit dem zweiten Planetenzahnrad in Eingriff steht, wobei die Welle (59), die ersten und zweiten Planetenzahnräder (49, 63), das Ringzahnrad (47) und das stationäre Ringzahnrad so ausgebildet und angeordnet sind, daß sie die die Wirkung der Drehung beseitigenden optischen Einrichtungen (51, 53) in einer vorgeschriebenen Weise in Abhängigkeit von Drehungen des Ringzahnrades (47) derart drehen, daß sich die drehbare Musterplatte (37) und die die Wirkung der Drehung beseitigenden optischen Einrichtungen so drehen, daß die optische Kopplung zwischen entsprechenden Linsen (35; 41) der ersten und zweiten Musterplatten (31, 37) unabhängig von den Winkelbewegungen der drehbaren Musterplatte aufrechterhalten wird.

2. Faseroptische Drehverbindung nach Anspruch 1, dadurch gekennzeichnet, daß sie weiterhin Gehäuseeinrichtungen zur Halterung der stationären Musterplatte (31) einschließt und daß das Delta-Prisma (51) in den die Wirkung der Drehung beseitigenden Einrichtungen auf einer drehbaren Platte (53) angeordnet ist, die in einer Ebene senkrecht zu den kollimierten Lichtstrahlen angeordnet ist, wobei die drehbare Platte einen offenen Mittelteil aufweist, in dem das Delta-Prisma befestigt ist, so daß die kollimierten Lichtstrahlen ungehindert zu dem Prisma und von diesem fort gelangen können.

3. Faseroptische Drehverbindung nach Anspruch 2, dadurch gekennzeichnet, daß die drehbare Musterplatte (37) drehbar in dem Gehäuse in einer Ebene senkrecht zu der gemeinsamen Achse derart befestigt ist, daß das Prisma (51) zwischen der drehbaren Musterplatte und der stationären Musterplatte (31) angeordnet ist.

4. Faseroptische Drehverbindung nach Anspruch 3, dadurch gekennzeichnet, daß das Ringzahnrad (47) und das stationäre Ringzahnrad in Ebenen parallel zu den stationären und drehbaren Musterplatten (31, 37) angeordnet und derart um die gemeinsame Achse herum aufgebaut und angeordnet sind, daß die kollimierten Lichtstrahlen durch das Ringzahnrad und das stationäre Ringzahnrad ohne Behinderung hindurchlaufen.

5. Faseroptische Drehverbindung nach Anspruch 4, dadurch gekennzeichnet, daß die Welle (59) drehbar in einem Lager (61) gelagert ist, das exzentrisch in der das Delta-Prisma (51) halternden drehbaren Platte (53) derart angeordnet ist, daß die Drehung der drehbaren Musterplatte (37) eine Drehung des Delta-Prismas über Winkel hervorruft, die gleich dem halben Drehwinkel der drehbaren Musterplatte sind.

6. Faseroptische Drehverbindung nach einem der vorhergehenden Ansprüche, dadurch gekennzeichnet, daß die die Wirkung der Drehung beseitigenden optischen Einrichtungen ein optisches Delta-Prisma (51) mit einer rechteckigen Grundfläche, die für eine optische Reflexion versilbert ist, mit dreieckigen Endflächen und mit ersten und zweiten geneigten rechteckigen Dachflächen aufweisen, und daß das Delta-Prisma für eine Drehung um die gemeinsame Achse befestigt ist, wobei die Achse durch die Mittelpunkte der ersten und zweiten geneigten Dachflächen verläuft.

**Revendications**

1. Joint optique rotatif destiné à coupler de la lumière entre un premier et un second jeu de fibres optiques qui peuvent tourner l'un par rapport à l'autre autour d'un axe commun, et du type mettant en oeuvre des plaques formant calibre ayant des éléments rapportés de montage d'objectifs, des objectifs de collimation introduits dans les éléments rapportés de montage et placés près du premier et du second jeu de fibres optiques, un dispositif optique de compensation de rotation et un dispositif d'entraînement du dispositif de compensation, caractérisé en ce qu'une première plaque (31) formant calibre est fixe et a des éléments rapportés (33) de montage d'objectifs qui ont une position réglable, en ce qu'une seconde plaque (37) formant calibre peut tourner et a des éléments rapportés fixes (39) de montage d'objectifs, et en ce que le dispositif d'entraînement du dispositif (51, 53) de compensation de rotation comporte une couronne dentée (47) montée sur la plaque rotative (37) formant calibre, un arbre (59) couplé au dispositif optique (51, 53) de compensation de rotation, un premier pignon satellite (49) fixé sur l'arbre (59) et en prise avec la couronne dentée (47), un second pignon satellite (63) monté à demeure sur l'arbre (59) et une couronne dentée fixe en prise avec le second pignon satellite, l'arbre (59), le premier et le second pignon satellite (49, 63), la couronne dentée (47) et la couronne dentée fixe ayant une construction et une disposition telles qu'ils font tourner le dispositif optique (51, 53) de compensation de rotation d'une manière prédéterminée lors de la rotation de la couronne dentée (47), de sorte que la plaque rotative (37) formant calibre et le dispositif optique de compensation de rotation tournent d'une manière qui conserve le couplage optique entre les objectifs correspondants (35; 41) de la première et de la seconde plaque (31, 37) formant calibre indépendamment des déplacements angulaires de la plaque rotative formant calibre.

2. Joint rotatif optique selon la revendication 1, caractérisé en ce qu'il comporte en outre un boîtier destiné à supporter la plaque fixe (31) formant calibre et en ce qu'un prisme Delta (51) du dispositif de compensation de rotation est monté sur une plaque rotative (53) disposée dans un plan perpendiculaire aux faisceaux lumineux collimatés, la plaque rotative ayant une partie centrale ouverte dans laquelle est monté le prisme Delta si bien que les faisceaux lumineux collimatés peuvent passer vers le prisme et après celui-ci sans être arrêtés.

3. Joint optique rotatif selon la revendication 2, caractérisé en ce que la plaque rotative (37) formant calibre est montée dans le boîtier afin qu'elle puisse tourner, dans un plan perpendiculaire à l'axe commun, si bien que le prisme (51) est disposé entre la plaque rotative formant calibre et la plaque fixe formant calibre (31).

4. Joint optique rotatif selon la revendication 3, caractérisé en ce que la couronne dentée (47) et la couronne dentée fixe sont placées dans des plans parallèles aux plaques fixe et rotative (31, 37) formant calibre et ont une construction et une disposition autour de l'axe commun telles que les faisceaux lumineux collimatés passent dans la couronne dentée et dans la couronne dentée fixe sans être arrêtés.

5. Joint optique rotatif selon la revendication 4, caractérisé en ce que l'arbre (59) est monté afin qu'il tourne dans un roulement (61) placé excentriquement dans la plaque rotative (53) supportant le prisme Delta (51) si bien que la rotation de la plaque rotative (37) formant calibre provoque la rotation du prisme Delta d'angles qui sont égaux à la moitié des angles de rotation de la plaque rotative formant calibre.

6. Joint optique rotatif selon l'une quelconque des revendications précédentes, caractérisé en ce que le dispositif optique de compensation de rotation comporte un prisme optique Delta (51) ayant une base rectangulaire qui est argentée afin qu'elle réfléchisse optiquement, des faces triangulaires d'extrémités et une première et une seconde face rectangulaire inclinée, le prisme Delta étant monté afin qu'il tourne autour de l'axe commun, l'axe passant par les centres de la première et de la seconde face inclinée.

FIG.1.

FIG.2.

1

FIG.3a.

FIG.3b.

FIG.3c.

# FIG.4.